# EUROPEAN PATENT APPLICATION

(11) **EP 3 905 461 A1**
(43) Date of publication of application: **03.11.2021**
(21) Application number: 21169191.0
(22) Date of filing: 19.04.2021
(51) Int. Cl.: H02B 1/30

(54) **COVER FOR ELECTRICAL PANEL AND ELECTRICAL PANEL COMPRISING SUCH A COVER**

(30) Priority: 29.04.2020 IT 202000009406
(71) Applicant: EURO INOX QUALITY SRL, 36015 Schio Vicenza (IT)
(72) Inventor: DI LELIO, Diego, 36015 Schio, VICENZA (IT)
(74) Representative: Busana, Omar

(57) **Abstract**

A cover (12) for an electrical panel (14) is adapted to close a container (18) of an electrical panel (14).

The cover (12) comprises a cover frame (20) and at least one inspection portion (22) adapted to display at least part of the internal content of the container (18). The inspection portion (22) comprises an inner surface (24), facing the inside of the container (18) in use, and an outer surface (26) opposite to the inner surface (24). The cover frame (20) comprises an inner frame surface (30), facing the inside of the container (32) in use, and an outer frame surface (32) opposite to the inner frame surface (30). The at least one inspection portion (22) comprises an operating portion (27) and a side coupling portion (28) at least partially coupled to said cover frame (20). The side coupling portion (28) is coupled with a portion of the inner frame surface (30). A frame made of polymeric material (34) is provided between the outer surface (26) of the inspection portion (22) and the outer frame surface (32).

## Description

### FIELD OF APPLICATION

The present invention relates to a cover for an electrical panel and an electrical panel comprising such a cover. In particular, the present invention relates to a cover provided with a transparent portion adapted for inspection.

### BACKGROUND ART

As known, in the field of electrical panels, there are specific regulatory standards for mechanical components to be used in environments in which particular attention to hygiene aspects is required, in particular in the food industry.

The purpose of these standards is to make the electrical panel, as well as other components used in the food industry, free of criticality from the hygienic point of view.

A possible criticality relates to the presence of contact surfaces between two metal components exposed to the environment which must be subject to particular restrictions. Standards require that the components exposed in the environment do not have metal-to-metal contact surfaces because they could be exposed to stagnant material, such as liquids or dust, which could lead to the proliferation of bacteria or contaminate the products.

Therefore, the standards require a gasket to be interposed between two metal surfaces so that the possibility of material stagnation in the metal-to-metal gap is precluded.

Also for this reason, the electrical panels of the background art are provided with a sealing gasket positioned between casing and cover.

In this type of electrical panel, there is often the need to see the inside of the electrical panel. For this reason, the covers of electrical panels can be provided with an inspection portion made of glass or polycarbonate.

However, the adoption of an inspection portion is a complication for the cover and the respective electrical panel because the coupling between inspection portion and cover frame is in any case prone to accumulation of moisture and dust as indicated above.

The coupling between the inspection portion and the cover frame is carried out through various fastening types, e.g. through mechanical fastening with screws, gluing, grooved gasket, etc.

In conventional couplings, a step is obtained between the inspection portion and the cover frame, which, in addition to creating an undesirable aesthetic effect, generates an additional position in which moisture and dust may nestle.

### PRESENTATION OF THE INVENTION

The need is therefore felt to solve at least partially the drawbacks and limitations mentioned above with reference to the prior art.

Therefore, the need is felt to provide a cover for an electrical panel provided with an inspection portion, which is less prone to hygienic problems than the covers of the background art.

Furthermore, the need is felt to have an electrical panel cover arranged with an inspection portion, which is more aesthetically pleasing.

Moreover, the need is felt for an electrical panel provided with a cover having an inspection portion, which is less prone to hygienic issues than covers of the background art.

Furthermore, the need is felt for an electrical panel arranged with a cover having an inspection portion, which is more aesthetically pleasing.

Such requirements are met by a cover for an electrical panel according to claim 1 and by an electrical panel comprising a cover according to claim 11.

### DESCRIPTION OF THE DRAWINGS

Further features and advantages of the present invention will be more comprehensible from the following description of preferred embodiments given by way of nonlimiting examples, in which:
- figure 1 diagrammatically shows a perspective view of an electrical panel according to the present invention;

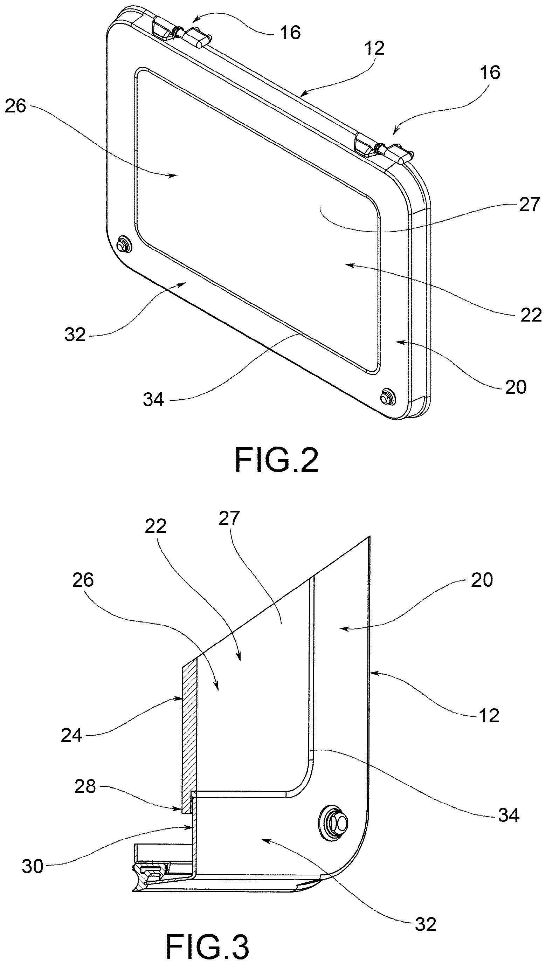

- figure 2 diagrammatically shows a perspective view of a cover for an electrical panel according to the present invention;
- figures 3 and 4 diagrammatically show partially sectioned portions of figure 2; and
- figure 5 diagrammatically shows an enlargement of a portion of a cover for an electrical panel according to the present invention.

Elements or parts in common to the embodiments described will be indicated hereafter using the same reference numerals.

### DETAILED DESCRIPTION

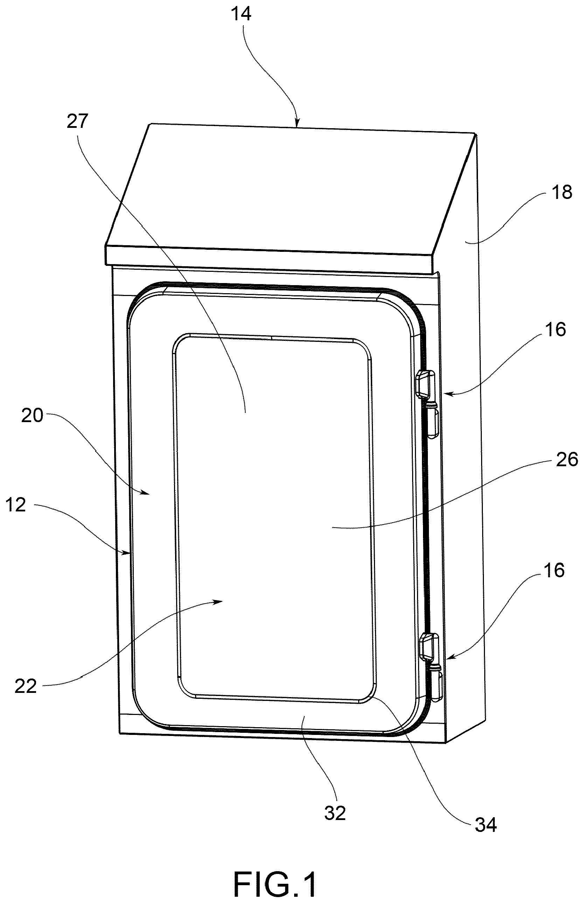

In figure 1, reference numeral 14 indicates an electrical panel, and reference numeral 12 indicates a cover 12 for an electrical panel 14, which is adapted to close a container 18 of an electrical panel 14.

The cover 12 comprises a cover frame 20 and at least one inspection portion 22 adapted to display at least part of the internal content of the container 18.

The inspection portion 22 comprises an inner surface 24, facing the inside of the container 18 in use, and an outer surface 26 opposite to the inner surface 24.

The cover frame 20 similarly comprises an inner frame surface 30, facing the inside of the container 32 in use, and an outer frame surface 32 opposite to the inner frame surface 30.

The at least one inspection portion 22 comprises an operating portion 27 and a side coupling portion 28 at least partially coupled to said cover frame 20.

The cover is characterized in that the side coupling portion 28 is coupled with a portion of the inner frame surface 30 in manner 1.

According to a possible embodiment, connection means 16 may be provided between cover 12 and container 15. In the accompanying figures, the connection means 16 comprise two hinges so that the cover can rotate between a closing position and an opening position.

In alternative embodiments, the connection means may comprise, for example, fastening screws.

The inspection portion 22 comprises an operating portion 27 which is adapted to at least partially display the inside of the container 18. It can be made of glass or polycarbonate, for example. In the case of polycarbonate, LEXAN® can advantageously be used.

In alternative embodiments, materials of type known to the person skilled in the art may be used, adapted to provide sufficient transparency to display the inside of the container.

In further alternative embodiments, screens adapted to be broken safely (so-called "safe crash" elements) may be used.

Again, the inspection portion may also be made of composite material comprising a central transparent portion and a side edge of a different type of material. In this case, the side coupling portion 28 may be provided with a different material from the inspection portion.

Furthermore, the inspection portion may also be at least partially opaque depending on specific requirements.

Advantageously, the inspection portion 22 which comprises operating portion 27 and side coupling portion 28 may be made of the same material.

According to a possible embodiment, the inspection portion 22, and in particular the operating portion 27, may be bulged towards the inside of the container or outwardly.

In other words, the inspection portion may have an outer surface having a three-dimensional development according to specific requirements.

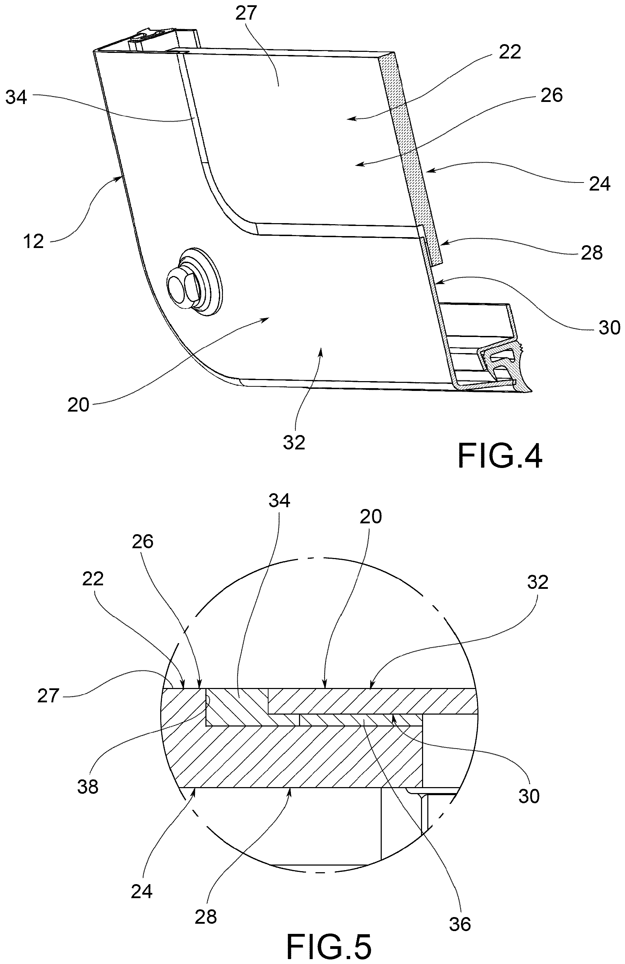

As shown in figure 5, the side coupling portion 28 may comprise a lowering of the outer surface 26.

In other words, the side coupling portion 28 is made by a reduction of the thickness of the inspection portion, so that there is a step 38 between the outer surface of the operating portion 27 and the outer surface of the side coupling portion 28.

According to a possible embodiment, the outer surface of the operating portion 27 and the outer surface of the side coupling portion 28 are substantially parallel to each other.

In this regard, step 38 may be substantially perpendicular to the outer surface of the operating portion 27 and the outer surface of the side coupling portion 28. In alternative embodiments, the step 38 may be inclined according to specific requirements relative to the outer surface of the operating portion 27 and the outer surface of the side coupling portion 28.

Since the side coupling portion 28 is coupled with a portion of the inner frame surface 30, the height of the step 38 may be greater than the thickness of the cover frame 20 near the join with the inspection portion.

Advantageously, the height of the step 38 and the thickness of the cover frame 20 near the join with the inspection portion may be such to ensure coplanarity between the outer surface 26 of the operating portion 22 and the outer frame surface 32 at least near the operating portion 22.

According to a possible embodiment, the side coupling portion 28 may be coupled to a portion of the inner frame surface 30 by means of a double-sided adhesive tape 36.

In alternative embodiments, the side coupling portion 28 may be coupled to a portion of the inner frame surface 30 by means of mechanical means. For example, mechanical means may comprise electrically welded captive screws at the inner surface of the frame, adapted to couple with respective holes provided on the side coupling portion and locked through nut means.

In case of mechanical means, the height of the step 38 may be substantially equal to the thickness of the frame near the connection.

Furthermore, the mechanical means may comprise, for example, retainers arranged on the inner surface of the frame adapted to couple with the side coupling portion.

Again, the side coupling portion may be glued, e.g. with a two-component glue, to the inner surface of the frame.

As mentioned above, a frame made of polymeric material 34 is provided between the outer surface 26 of the inspection portion 22 and the outer frame surface 32.

Advantageously, the polymeric material frame is adapted to fill the space between inspection portion 22 and cover frame 20.

As shown in figure 5, in a preferred embodiment, the polymeric material frame 34 is arranged between the step 38 of the side coupling portion 28 and the cover frame 20 to partially occupy the space comprised between the inner surface of the cover frame 20 and the outer surface of the side coupling portion.

According to a possible embodiment, the frame made of polymeric material 34 may be made of food-grade silicone.

In this case, once the inspection portion is mounted to the inner surface of the frame, the space comprised between inspection portion and inner surface of the frame may be filled with silicone so that there is no substantial discontinuity between the outer surface of the inspection portion and the outer surface of the frame.

According to alternative embodiments, the polymeric material frame 34 may be made from a general-purpose, non-food-grade silicone.

Furthermore, the polymeric material frame 34 may be a prefabricated gasket which may be arranged by means of an adhesive substance, or by means of mechanical coupling with a respective housing provided on the frame or inspection portion, as will be apparent to a person skilled in the art.

The advantages that can be achieved by a cover for electrical panel and an electrical panel according to the present invention are thus apparent.

Firstly, a cover for electrical panel provided with an inspection portion has become available, which is adapted to ensure hygiene at the interface between the inspection portion and the cover frame, since there is no coupling between two rigid materials.

Furthermore, such a coupling is also adapted to ensure a pleasing appearance, because there is no discontinuity between inspection portion, polymeric material frame, and cover frame near the join between the elements.

Moreover, the cover for electrical panel according to the present invention can also be used in an existing electrical panel.

In the embodiments described above, a person skilled in the art will be able to make changes and or substitutions of elements described with equivalent elements without departing from the scope of the appended claims to satisfy specific requirements.

For example, the principles of the present invention can also be applied to a cover for a generic container also not of the electrical panel type.

For example, they can be applied to containers for containing emergency supplies.

## Claims

1. Cover (12) for an electrical panel (14) adapted to close a container (18) of an electrical panel (14), said cover (12) comprising a cover frame (20) and at least one inspection portion (22) adapted to display at least part of the internal content of the container (18);
said inspection portion (22) comprising an inner surface (24), in use facing the inside of the container (18) and an outer surface (26) opposite the inner surface (24); said cover frame (20) comprising an inner frame surface (30), in use facing the inside of the container (32) and an outer frame surface (32) opposite the inner frame surface (30);
said at least one inspection portion (22) comprising an operating portion (27) and a side coupling portion (28) at least partially coupled to said cover frame (20); **characterized in that**
said side coupling portion (28) is coupled with a portion of the inner surface of the frame (30); between said outer surface (26) of said inspection portion (22) and said outer surface of frame (32) a frame of polymeric material being provided (34).

2. The cover (12) according to the preceding claim, **characterized in that** said inspection portion (22) is made of glass or polycarbonate.

3. Cover (12) according to any of the preceding claims, **characterized in that** said side coupling portion (28) comprises a lowering (36) of the outer surface (26).

4. Cover (12) according to the preceding claim, **characterized in that** the side coupling portion (28) is made by a reduction of the thickness of the inspection portion, so that between the outer surface of the operating portion (27) and the outer surface of the side coupling portion (28) there is a step (38).

5. Cover (12) according to any of the preceding claims, **characterized in that** the outer surface (26) of the operating portion (22) is substantially coplanar to the outer surface of the frame (32) near the operating portion (22).

6. Cover (12) according to any of the preceding claims, **characterized in that** the outer surface of the side coupling portion (28) is substantially parallel to a portion of inner surface of the cover frame (20) which is coupled to the side coupling portion.

7. Cover (12) according to any of the preceding claims, **characterized in that** said cover frame (20) and said side coupling portion (28) are joined together by double-sided adhesive (36).

8. Cover (12) according to any of the preceding claims, **characterized in that** said cover frame (20) and said side coupling portion (28) are connected to each other by mechanical means.

9. Cover (12) according to claim 4, **characterized in that** the height of the step (38) is greater than the thickness of the cover frame (20) near the join with the inspection portion (22).

10. Cover (12) according to any of the claims from 4-9, **characterized in that** the polymeric material frame (34) is arranged between the step (38) of the side coupling portion (28) and the cover frame (20) so as to partially occupy the space between the inner surface of the cover frame (20) and the outer surface of the side coupling portion.

11. Cover (12) according to any of the preceding claims, **characterized in that** said polymeric material frame (34) is made of silicone suitable for food use.

12. Electrical panel (12) comprising a container (15) and a cover (12) according to any of the preceding claims.
